# EUROPÄISCHE PATENTSCHRIFT

(11) **EP 2 930 326 B1**
(45) Veröffentlichungstag und Bekanntmachung des Hinweises auf die Patenterteilung: **30.08.2017**
(21) Anmeldenummer: 15000203.8
(22) Anmeldetag: 23.01.2015
(51) Int. Cl.: F01N 13/10, F02B 37/18, F02M 26/05, F02M 26/10, F02M 26/16, F02M 26/42, F02M 26/70, F02M 26/71

(54) **Abgaskrümmer für eine Brennkraftmaschine, insbesondere in Kraftfahrzeugen**
Exhaust manifold for an internal combustion engine, particularly in motor vehicles
Collecteur de gaz d'échappement pour un moteur à combustion interne, en particulier dans des véhicules automobiles

(30) Priorität: 09.04.2014 DE 102014005212
(43) Veröffentlichungstag der Anmeldung: 14.10.2015
(73) Patentinhaber: MAN Truck & Bus AG, 80995 München (DE)
(72) Erfinder: Greiner, Manfred, 91241 Kirchensittenbach (DE)
(74) Vertreter: Liebl, Thomas

(56) Entgegenhaltungen:
- EP-A1- 2 295 769
- EP-A1- 2 619 436
- EP-A2- 1 213 468
- DE-A1- 10 222 919
- DE-A1-102011 118 899
- DE-C1- 19 858 626

## Beschreibung

Die vorliegende Erfindung betrifft einen Abgaskrümmer für eine Brennkraftmaschine, insbesondere in Kraftfahrzeugen, mit einer Abgasturboaufladung und einer Abgasrückführung gemäß dem Oberbegriff des Patentanspruchs 1. Weiter betrifft die vorliegende Erfindung ein Verfahren zum Betreiben einer Brennkraftmaschine eines Kraftfahrzeugs nach dem Oberbegriff des Anspruchs 13.

Aus der DE 10 2006 016432 A1 ist eine Brennkraftmaschine mit Abgasturboaufladung und einer Abgasrückführeinrichtung bekannt, bei der in einem zweiflutigen Abgaskrümmer von der einen Flut eine Auslassöffnung für die Abgasrückführung abzweigt, während beide Fluten zu einem gemeinsamen Auslass für den Abgasturbolader zusammengeführt sind. Vor der Auslassöffnung für den Abgasturbolader ist eine Überströmöffnung vorgesehen, die die Druckverhältnisse in der Flut mit der Abgasrückführöffnung positiv beeinflussen soll.

Weiter ist aus der DE 10 2005 017 562 A1 ein Aufbau bekannt, bei der die an einem Sammelrohr angeordneten Auslassöffnungen für die Abgasrückführung und zum Abgasturbolader räumlich weit voneinander beabstandet sind. Zum Verschließen und Öffnen der Auslassöffnungen sind auf einer linear verstellbaren gemeinsamen Achse zwei voneinander beabstandete, ballige bzw. kugelige Sperrelemente angeordnet. Durch Linearverstellung der Achse werden die Sperrelemente zwischen ihrer Offen- und Schließstellung mit Bezug zu den jeweils zugeordneten Auslassöffnungen verstellt.

Ein vom Prinzip her analoger Sammelrohraufbau mit räumlich weit voneinander beabstandeten Auslassöffnungen für die Abgasrückführung und zum Abgasturbolader ist auch aus der AT 512 567 A1 bekannt. Dort sind die Sperrelemente durch zwei separate und voneinander unabhängige Klappen gebildet.

Weiter offenbart die DE 10 2011 118 899 A1 einen Abgaskrümmer für eine Brennkraftmaschine, wobei die Brennkraftmaschine eine Abgasturboaufladung und eine Abgasrückführung zum Rückführen von Abgas aus dem Abgaskrümmer zum Maschineneinlass aufweist. Der Abgaskrümmer weist dabei eine Abgastrakteinheit mit mehreren, mit den Brennräumen der Brennkraftmaschine verbunden Einströmöffnungen und von der Abgastrakteinheit über Anschlussverbindungen abgehende Auslassöffnungen für die Abgasrückführung und zum Abgasturbolader auf. Die Abgastrakteinheit weist ein Sammelrohr auf, an das ein mit zwei Zylindern der Brennkraftmaschine verbundenens Abgaskrümmer-Seitenteil der Brennkraftmaschine angeschlossen ist, so dass Abgas aus zwei Zylindern der Brennkraftmaschine über das zugeordnete Abgaskrümmer-Seitenteil in das Sammelrohr eingeleitet wird. Zudem ist den Auslassöffnungen hier auch eine gesteuert verschwenkbare Abgasklappe zugeordnet, das den Abgasstrom in Abhängigkeit von vorgebbaren Betriebsparametern gezielt auf die Auslassöffnungen aufzeigt.

Demgegenüber ist es Aufgabe der Erfindung, mit relativ einfachen Mitteln die Strömungsverhältnisse im Abgaskrümmer derart zu steuern, dass eine verbesserte Beaufschlagung der Turbine des Abgasturboladers und zugleich eine gezielte Abgasrückführung, insbesondere auch im instationären Betrieb, der Brennkraftmaschine erzielbar ist.

Die Lösung dieser Aufgabe wird mit den Merkmalen der unabhängigen Patentansprüche erzielt. Vorteilhafte und besonders zweckmäßige Weiterbildungen und Ausgestaltungen der Erfindung sind in den jeweiligen Unteransprüchen angeführt.

Gemäß Anspruch 1 wird ein Abgaskrümmer für eine Brennkraftmaschine, insbesondere in Kraftfahrzeugen, mit einer Abgasturboaufladung und einer Abgasrückführung zum Rückführen von Abgas aus dem Abgaskrümmer zum Maschineneinlass vorgeschlagen, wobei der Abgaskrümmer ein Sammelrohr mit mehreren, mit den Brennräumen der Brennkraftmaschine, vorzugsweise über Anschlussstutzen, verbindbare Einströmöffnungen und vom Sammelrohr über Anschlussverbindungen abgehende Auslassöffnungen für die Abgasrückführung und zum Abgasturbolader aufweist, wobei den Auslassöffnungen ein gesteuert verlagerbares Strömungsleitelement zugeordnet ist, das den Abgasstrom in Abhängigkeit von vorgebbaren Betriebsparametern gezielt auf die Auslassöffnungen aufteilt. Weiter ist vorgesehen, dass das Strömungsleitelement durch eine bzw. eine einzige im Sammelrohr verschwenkbar gelagerte Abgasklappe gebildet ist, mittels der der Abgasstrom sowohl zu der Auslassöffnung für die Abgasrückführung als auch zu der Auslassöffnung zum Abgasturbolader steuerbar ist.

Mit anderen Worten sind bei der vorliegenden Erfindungsidee die Auslassöffnungen für die Abgasrückführung und den Abgasturbolader einander am Sammelrohr vorteilhaft dergestalt zugeordnet, dass der Abgasstrom zu den Auslassöffnungen mittels einer einzigen, sämtlichen Auslassöffnungen zugeordneten und das Strömungsleitelement ausbildenenden Abgasklappe steuerbar ist, die im Sammelrohr verschwenkbar gelagert ist. Dadurch wird eine wirkungsvolle Beaufschlagung eines im praktischen Betrieb an den Abgaskrümmer angeschlossenen Abgasturboladers erzielt, die eine einflutige Ausgestaltung des Sammelrohres und eine variable Anordnung des Abgasturboladers ermöglicht und die zudem hohe Abgasrückführraten ohne Verwendung zum Beispiel von Flatterventilen ermöglicht. Ein weiterer Vorteil liegt darin, dass mit der erfindungsgemäßen Abgasklappenanordnung auch die Motorbremse bzw. EVB (Exhaust Brake Valve) aktiviert und damit die Motorbremsleistung geregelt werden kann.

Mit dieser Lösung kann somit durch eine einzige Abgasklappe die EVB aktiviert und die Abgasrückführung gesteuert werden, so dass an sich übliche Ansaug- und Abgasdrosselklappenanordnungen vorteilhaft entfallen können. Es kann somit insgesamt platzsparender und mit weniger Bauteilvielfalt gebaut werden.

Durch die Anordnung der Abgasklappe im Bereich der Auslassöffnung zum Abgasturbolader wird zudem der Abgasturbolader selbst weniger belastet und kann der Abgasturbolader insgesamt variabler angebaut werden.

Die Verschwenkung der Abgasklappe erfolgt gesteuert bzw. geregelt über eine Steuer- und/oder Regeleinrichtung, die bevorzugt ein mit der Abgasklappe gekoppeltes Betätigungselement, vorzugsweise einen Aktuator, zur Klappenverstellung entsprechend definiert vorgegebener Betriebsparameter der Brennkraftmaschine ansteuert.

Besonders bevorzugt ist eine Ausführungsform, bei der die Auslassöffnungen für die Abgasrückführung und zum Abgasturbolader benachbart zueinander am Sammelrohr angeordnet sind, und zwar insbesondere dergestalt, dass die Auslassöffnungen für die Abgasrückführung und zum Abgasturbolader im Wesentlichen diametral gegenüberliegend am Sammelrohr liegen. Dadurch lässt sich eine baulich einfache und fertigungstechnisch ebenfalls einfach herzustellende Abgasklappe einsetzen, mittels der die Abgasströme zu den Auslassöffnungen auf einfache und funktionssichere Weise in der gewünschten Weise gesteuert werden können.

Besonders bevorzugt können die Auslassöffnungen für die Abgasrückführung und zum Abgasturbolader zwischen zwei Einströmöffnungen des Sammelrohres positioniert sein, wodurch auf einfache Weise sichergestellt wird, dass die Abgasströme ohne wesentliche Turbulenzen und Strömungswiderstände in der gewünschten Weise zu den jeweiligen Auslassöffnungen strömen können.

Gemäß einer erfindungsgemäßen Ausführungsform ist vorgesehen, dass die Abgasklappe so im Sammelrohr, insbesondere zwischen zwei Einströmöffnungen des Sammelrohres, positioniert ist, dass ein erster Abgasstrom aus einer durch wenigstens einen Brennraum gebildeten ersten Brennraumgruppe über die zugeordnete wenigstens eine Einströmöffnung in das Sammelrohr einströmt und dort in einer ersten Strömungsrichtung in Richtung Abgasklappe (bzw. in Richtung Auslassöffnungen) strömt, während ein zweiter Abgasstrom aus einer durch wenigstens einen weiteren Brennraum gebildeten zweiten Brennraumgruppe über die zugeordnete wenigstens eine Einströmöffnung in das Sammelrohr einströmt und dort in einer, der ersten Strömungsrichtung entgegengesetzten zweiten Strömungsrichtung in Richtung Abgasklappe (bzw. in Richtung Auslassöffnungen) strömt. Bei einer derartigen Anordnung der Abgasklappe erfolgt eine besonders vorteilhafte Strömungsführung entgegengerichteter Abgasströme, die sich nicht in einer unerwünschten Weise gegenseitig beeinflussen können. Vielmehr wird bei einer derartigen Anordnung sichergestellt, dass die jeweils gewünschten Abgasmassenströme aus den jeweiligen Brennräumen der Brennkraftmaschine in der gewünschten Weise zum einen in das Sammelrohr einströmen und zum anderen dort in Richtung Abgasturbolader und/oder in Richtung Abgasrückführung aufgeteilt werden. Durch eine derartige bevorzugte Anordnung kann somit der Steuerungs- bzw. Regelaufwand insbesondere auch im instationären Brennkraftmaschinenbetrieb deutlich reduziert werden und können dennoch die gewünschten Abgas-Massenströme in der gewünschten Weise zum Abgasturbolader bzw. zur Abgasrückführung strömen.

Die Abgasklappe kann grundsätzlich jede geeignete Geometrie bzw. Form aufweisen. Besonders bevorzugt ist ein Aufbau der Abgasklappe, die einen mehreckigen bzw. walzen- und/oder kugelförmigen Querschnitt aufweist. Beispielsweise kann die Abgasklappe einen Y-förmigen und/oder dreieckförmigen Walzen- und/oder Kugelquerschnitt aufweisen. Eine derartig ausgebildete Abgasklappe ist zum einen relativ stabil. Darüber hinaus kann sie auf einfache Weise im Sammelrohr funktionssicher gelagert werden. Des Weiteren erlaubt insbesondere ein kugel- und/oder walzenförmiger bzw. zylinderförmiger Querschnitt die funktionssichere und fertigungstechnisch einfache Herstellung der jeweils benötigten Abgasleitflächen.

Weiter erfindungsgemäß weist die Abgasklappe mehrere, insbesondere drei, abgasleitende Leitwände auf. In Verbindung mit derartigen Leitwänden ist es besonders vorteilhaft, wenn die Leitwände wenigstens in Teilbereichen gekrümmt ausgebildet sind. Besonders bevorzugt für eine gewünschte Abgasumlenkung ist eine konkave Krümmung. Des Weiteren können derartige Leitwände einen oder aber auch mehrere derartiger Krümmungsbereiche aufweisen. Insbesondere im Falle mehrerer Krümmungsbereiche kann dann vorgesehen sein, dass sich diese, bezogen auf den Querschnitt, in Längsrichtung der Leitwand aneinander anschließen.

Gemäß einer besonders bevorzugten konkreten Ausgestaltung weist die Abgasklappe eine erste Leitwand auf, die so ausgebildet bzw. insbesondere gekrümmt ist, dass wenigstens eine der nachfolgenden Bedingungen erfüllt ist:
- dass diese in einer AGR-Absperrstellung, insbesondere Motorstartstellung der Abgasklappe einen von einer ersten Brennraumgruppe kommenden Abgasstrom in Richtung zur Auslassöffnung zum Abgasturbolader umlenkt und, insbesondere im Zusammenwirken mit einem Wandbereich des Sammelrohres, eine Strömung dieses Abgasstroms in Richtung zur Auslassöffnung für die Abgasrückführung im Wesentlichen sperrt,
- dass diese in einer Betriebsstellung der Abgasklappe einen von der ersten Brennraumgruppe kommenden und von der Abgasklappe geteilten Abgasteilstrom in Richtung zur Auslassöffnung für die Abgagsrückführung umlenkt,
- dass diese in einer Motorbremsstellung der Abgasklappe der Auslassöffnung für die Abgasrückführung zugeordnet ist und diese von dort her, insbesondere im Zusammenwirken mit einem Wandbereich des Sammelrohres, im Wesentlichen verschließt.

Die Begrifflichkeit AGR steht hier als Abkürzung für den Begriff Abgasrückführung. Unter einer AGR-Absperrstellung wird hier somit eine Stellung der Abgasklappe verstanden, bei der, wie vorstehend beschrieben, eine Abgasrückführung bzw. eine Strömung des Abgasstroms in Richtung zur Auslassöffnung für die Abgasrückführung im Wesentlichen bzw. ganz gesperrt ist. Dies ist vorzugsweise beim Motorstart der Fall, kann jedoch ggf. auch in anderen Betriebszuständen der Fall sein bzw. gewünscht sein, die nicht der Motorstartstellung entsprechen.

Die Abgasklappe weist weiter erfindungsgemäß eine zweite Leitwand auf, die so ausgebildet bzw. insbesondere gekrümmt ist, dass wenigstens eine der nachfolgenden Bedingungen erfüllt ist:
- dass diese in einer AGR-Absperrstellung, insbesondere Motorstartstellung der Abgasklappe der Auslassöffnung für die Abgasrückführung zugeordnet ist und diese von dort her, insbesondere im Zusammenwirken mit einem Wandbereich des Sammelrohres, im Wesentlichen verschließt,
- dass diese in einer Betriebsstellung der Abgasklappe einen von einer zweiten Brennraumgruppe kommenden und von der Abgasklappe geteilten Abgasteilstrom in Richtung zur Auslassöffnung für die Abgasrückführung umlenkt,
- dass diese in einer Motorbremsstellung der Abgasklappe den zugeordneten Sammelrohrquerschnitt, insbesondere im Zusammenwirken mit einem Wandbereich des Sammelrohres, im Wesentlichen versperrt und damit einen von der zweiten Brennraumgruppe kommenden Abgasstrom in Richtung der Auslassöffnungen im Wesentlichen sperrt.

Erfindungsgemäß weist die Abgasklappe weiter eine dritte Leitwand auf, die so ausgebildet bzw. insbesondere gekrümmt ist, dass wenigstens eine der nachfolgenden Bedingungen erfüllt ist:
- dass diese in einer AGR-Absperrstellung, insbesondere Motorstartstellung der Abgasklappe einen von der zweiten Brennraumgruppe kommenden Abgasstrom in Richtung zur Auslassöffnung zum Abgasturbolader umlenkt und, insbesondere im Zusammenwirken mit einem Wandbereich des Sammelrohres, eine Strömung des von der zweiten Brennraumgruppe kommenden Abgasstroms in Richtung zur Auslassöffnung für die Abgasrückführung im Wesentlichen sperrt,
- dass diese in einer Betriebsstellung der Abgasklappe einen von der zweiten Brennraumgruppe kommenden und von der Abgasklappe geteilten Abgasteilstrom in Richtung zur Auslassöffnung zum Abgasturbolader umlenkt,
- dass diese in einer Motorbremsstellung der Abgasklappe den Sammelrohrquerschnitt im Wesentlichen dergestalt versperrt, dass ein von der ersten Brennraumgruppe kommender Abgasstrom in Richtung der Auslassöffnung zum Abgasturbolader umgelenkt ist und eine Strömung dieses Abgasstroms, insbesondere im Zusammenwirken mit einem Wandbereich des Sammelrohres, in Richtung der Auslassöffnung für die Abgasrückführung im Wesentlichen gesperrt ist.

Mit einem derartigen konkreten Aufbau einer Abgasklappe ergeben sich die zuvor genannten Vorteile in besonders vorteilhafter Weise. Die in den Ansprüchen 1 und 13 aufgelisteten Merkmale a) bis c) sind bevorzugt mit einer Und-Verknüpfung miteinander verbunden, können grundsätzlich aber auch durch einer Oder-Verknüpfung oder durch eine Und/Oder-Verknüpfung miteinander verbunden sein, so dass die in den Ansprüchen 1 und 13 aufgelisteten einzelnen Merkmale ausdrücklich jeweils auch einzeln bzw. in beliebigen Kombinationen miteinander offenbart sind.

Besonders bevorzugt ist weiter eine konkrete Ausgestaltung, bei der die dritte Leitwand zwei Krümmungsbereiche, insbesondere zwei konkav gekrümmte Krümmungsbereiche, aufweist, so dass in einer Betriebsstellung der Abgasklappe der von der zweiten Brennraumgruppe kommende und von der Abgasklappe geteilte Abgasteilstrom mittels des ersten Krümmungsbereiches in Richtung zur Auslassöffnung zum Abgasturbolader umlenkbar ist, während in einer Motorbremsstellung der Abgasklappe der von der ersten Brennraumgruppe kommende Abgasstrom mittels des sich an den ersten Krümmungsbereich anschließenden zweiten Krümmungsbereiches in Richtung der Auslassöffnung zum Abgasturbolader umlenkbar ist. Mit einer derartig ausgebildeten dritten Leitwand können somit auf besonders vorteilhafte und funktionsintegrierte Weise durch zwei unterschiedliche Krümmungsbereiche jeweils unterschiedlich gerichtete Abgasströme in der gewünschten Weise umgelenkt werden.

Die Abgasklappe wirkt, insbesondere zum Verschließen bzw. Sperren von Strömungswegen, vorzugsweise mit dem Sammelrohrwandbereich, das heißt dem Sammelrohr-Innenwandbereich, zusammen. Dies kann grundsätzlich auf unterschiedliche Art und Weise erfolgen, indem zum Beispiel ein Eckbereich der Abgasklappe mehr oder weniger unmittelbar an einen Wandbereich des Sammelrohres anschließt. Alternativ oder zusätzlich dazu kann aber auch vorgesehen sein, dass der Abgasklappe wenigstens ein von einem Sammelrohrwandbereich weg nach innen, in das Sammelrohr einragender finnenartiger Wandfortsatz zugeordnet ist, an dem die Abgasklappe, insbesondere eine erste Leitwand der Abgasklappe, in einer AGR-Absperrstellung, insbesondere Motorstartstellung zur Sperrung des Abgasstroms von der ersten Brennraumgruppe in Richtung zur Auslassöffnung für die Abgasrückführung anschließt und/oder mit einem definierten Spaltabstand oder unmittelbar anliegt. Alternativ oder zusätzlich kann die Abgasklappe zum Beispiel in der Motorbremsstellung zur Umlenkung des von der ersten Brennraumgruppe kommenden Abgasstroms in Richtung der Auslassöffnung zum Abgasturbolader zur Sperrung einer Strömung dieses Abgasstroms in Richtung der Auslassöffnung für die Abgasrückführung an den Wandfortsatz anschließen. Weiter alternativ oder zusätzlich kann der Wandfortsatz aber auch so ausgebildet sein, dass er den von der ersten Brennraumgruppe kommenden Abgasstrom in eine definierte Richtung, insbesondere in Richtung der Auslassöffnung zum Abgasturbolader umlenkt.

In diesem Zusammenhang sei ausdrücklich erwähnt, dass das Anliegen bzw. Anschließen der Abgasklappe an das Sammelrohr bzw. an die Sammelrohrwand stets dergestalt erfolgt, dass in einer Sperr- bzw. Schließstellung die Strömungsverbindung ganz bzw. im Wesentlichen unterbunden ist, d.h. ggf. auch Leckagen oder Spalte vorhanden sein können, die eine strömungstechnisch vernachlässigbare bzw. geringe Durchströmung erlauben.

Gemäß einer besonders bevorzugten konkreten Ausgestaltung weist die Abgasklappe einen dreieckförmigen bzw. Y-förmigen Walzen- und/oder Kugelquerschnitt mit drei Leitwänden auf, wobei eine erste Leitwand und eine zweite Leitwand von den jeweiligen, vorzugsweise verrundeten, Eckbereichen ausgehend konkav nach innen gekrümmt sind, während die dritte Leitwand zwischen deren vorzugsweise verrundeten Eckbereichen zwei aneinander angrenzende konkav nach innen gekrümmte Krümmungsbereiche aufweist. Besonders bevorzugt ist vorgesehen, dass die beiden Krümmungsbereiche der dritten Leitwand im Angrenzungsbereich mit einer erhabenen und verrundeten Kuppel ineinander übergehen. Mit den eckseitigen Verrundungen bzw. der Verrundung des Angrenzungsbereiches wird auf vorteilhafte Weise die Ausbildung von unerwünschten Verwirbelungen und damit Turbulenzen vermieden. Des Weiteren gelingt mit derartigen verrundeten Eckbereichen in Verbindung mit den sich daran anschließenden Krümmungsbereichen eine vorteilhafte Aufteilung des bzw. der Abgasströme für den Fall, dass zum Beispiel in der Betriebsstellung sowohl der Abgasturbolader als auch die Abgasrückführung mit einem Abgasmassenstrom beaufschlagt werden sollen.

Gemäß einer weiteren besonders bevorzugten Ausgestaltung wird vorgeschlagen, dass die Abgasklappe asymmetrisch bezüglich der Brennraumzahl angeordnet ist und dementsprechend der ersten Brennraumgruppe eine geringere Anzahl an Brennräumen zugeordnet ist als der zweiten Brennraumgruppe. Vorzugsweise ist in diesem Zusammenhang vorgesehen, dass der ersten Brennraumgruppe zum Beispiel ein Brennraum oder zwei Brennräume zugeordnet sind, während dann entsprechend der zweiten Brennraumgruppe wenigstens ein Brennraum mehr zugeordnet ist. Dies hat einen vorteilhaften Einfluss auf die Strömungsverhältnisse im Abgaskrümmer mit einer wirkungsvollen Staudruckaufladung des Abgasturboladers und einer gezielten Aufteilung des Abgasmassenstroms für die Abgasrückführungsrate.

Die Abgasklappe selbst ist bevorzugt an diametral gegenüberliegenden Wandabschnitten des Sammelrohrs, insbesondere im Bereich zwischen zwei benachbarten Einströmöffnungen, gelagert. Damit lässt sich die Abgasklappe insgesamt sehr funktionssicher im Sammelrohr anordnen und unterbringen.

Das Sammelrohr selbst ist bevorzugt für den Anschluss von zumindest zwei Zylindern der Brennkraftmaschine, insbesondere für drei oder mehr, höchst bevorzugt sechs, Zylinder, ausgelegt, wobei die Abgasklappe und/oder die Auslassöffnungen für die Abgasrückführung und zum Abgasturbolader zwischen einem der in Längsrichtung des Abgaskrümmers letzten beiden Einströmöffnungspaare angeordnet ist oder sind. Letzteres hat wiederum einen vorteilhaften Einfluss auf die Strömungsverhältnisse im Abgaskrümmer mit einer wirkungsvollen Staudruckaufladung des Abgasturboladers und einer gezielten Aufteilung des Abgasmassenstroms für die Abgasrückführungsrate.

In einer vorteilhaften Weiterbildung können den Einströmöffnungen im Sammelrohr gegenüberliegende Wandabschnitte wellenförmig ausgebildet sein, derart, dass die jeweiligen Wellenberge in Strömungsrichtung des Abgases betrachtet vor den jeweiligen Einströmöffnungen positioniert sind. Damit kann eine noch bessere Gleichrichtung des Abgasmassenstroms im Sammelrohr erzielt werden, die insbesondere das Ansprechverhalten des Abgasturboladers verbessert und vermehrt einen strömungsbedingten Abgasgegendruck bei hohen Motordrehzahlen vermindert. Dazu können ferner die die Einströmöffnungen umschließenden, an das Sammelrohr angegossenen Anschlussstutzen bzw. Rohrführungen in Strömungsrichtung des Abgases im Sammelrohr geneigt oder gekrümmt ausgebildet sein.

Die sich mit der erfindungsgemäßen Verfahrensführung ergebenden Vorteile entsprechend denjenigen, wie sie zuvor ausführlich gewürdigt worden sind. Insofern wird auf die zuvor gemachten Ausführungen verwiesen.

Ferner wird auch noch ein Fahrzeug, insbesondere ein Nutzfahrzeug, beansprucht, das einen Abgaskrümmer entsprechend der erfindungsgemäßen Ausgestaltung aufweist.

Ein Ausführungsbeispiel der Erfindung ist im Folgenden anhand der beigefügten, schematischen Zeichnungen näher erläutert.

Es zeigen:
- Fig. 1: eine Ansicht in Richtung des Pfeils X der Fig. 2 auf einen Abgagskrümmer für eine Rein-Brennkraftmaschine für Kraftfahrzeuge, mit einem an den Abgaskrümmer angeschlossenen Abgasturbolader und einem angeschlossenen Rohrstutzen für eine Abgasrückführleitung,
- Fig. 2: einen Schnitt gemäß Linie 2-2 der Fig. 1 durch den Abgaskrümmer mit einer in dessen Sammelrohr schwenkbar gelagerten Abgasklappe in einer AGR-Absperrstellung, insbesondere Motorstartstellung der Abgasklappe,
- Fig. 3: die Schnittdarstellung entsprechend Fig. 2 in einer Betriebsstellung der Abgasklappe,
- Fig. 4: die Darstellung gemäß Fig. 2 in einer Motorbremsstellung der Abgasklappe, und
- Fig. 5: ein lediglich schematischer und beispielhafter Schnitt entlang der Linie 3-3 der Fig. 1 durch den Abgaskrümmer mit den gewellt ausgeführten Wandabschnitten stromauf der schwenkbar gelagerten Abgasklappe.

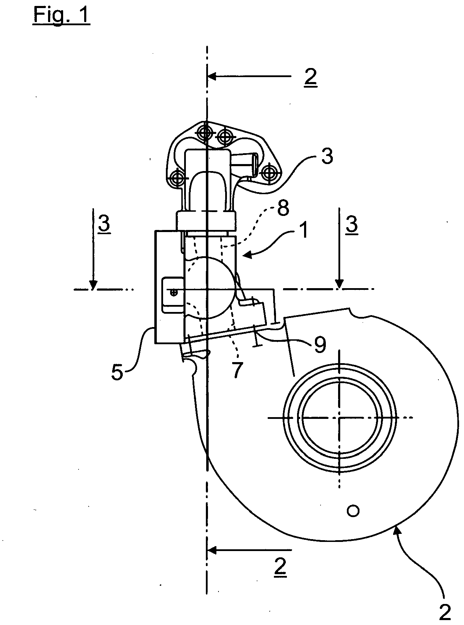

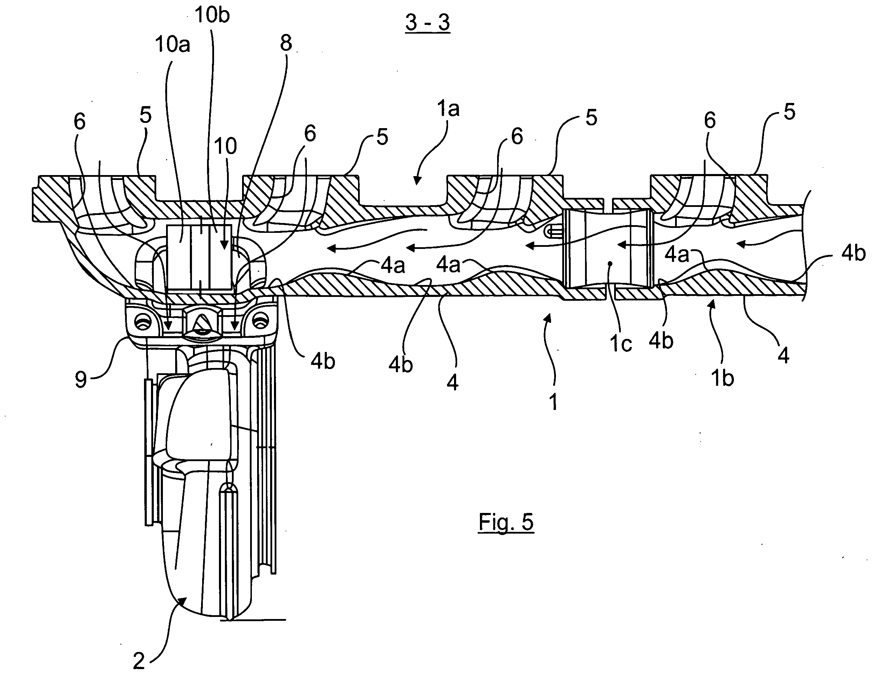

Insbesondere in den Fig. 1 und 5 ist ein Abgaskrümmer 1 gezeigt, der an eine Brennkraftmaschine, insbesondere für Kraftfahrzeuge, wie beispielsweise Nutzfahrzeuge, mit in zumindest einer Reihe angeordneten Zylindern (Reihenbrennkraftmaschine oder Zylinderbank einer V-Brennkraftmaschine) anbaubar ist und an den die Turbine eines nicht weiter beschriebenen Abgasturboladers 2 und ein Rohrstutzen 3 einer abgehenden Abgasrückführleitung (nicht dargestellt) für eine Abgasrückführung üblicher Bauart angeschlossen ist.

Die Abgasturbine kann zum Beispiel eine variable Turbinengeometrie (VGT) aufweisen. Der Abgaskrümmer 1 kann zum Beispiel einteilig ausgebildet sein oder, wie insbesondere in der Fig. 5 dargestellt, zweiteilig mit einem Abschnitt 1a und 1b ausgebildet sein, wobei die Abschnitte über eine Dichthülse 1c gasdicht miteinander verbunden sind.

Der Abgaskrümmer 1 setzt sich funktionell aus einem etwa linear ausgerichteten, einflutigen Sammelrohr 4 und daran angeformten, etwa horizontal abgehenden Anschlussstutzen 5 zusammen, die Einströmöffnungen 6 bildend an den Zylinderkopf (nicht dargestellt) und damit an die Brennräume der Brennkraftmaschine bzw. deren Abgaskanäle angeschlossen sind.

Ferner ist eine in der Bildebene der Fig. 1 nach oben gehende Auslassöffnung 8 vorgesehen, an die der Rohrstutzen 3 für die Abgasrückführleitung angeschlossen ist.

An eine in der Bildebene der Fig. 1 nach unten führende Auslassöffnung 7 an einem angeformten Anschlussflansch 9 ist die Turbine des Abgasturboladers 2 angeschlossen.

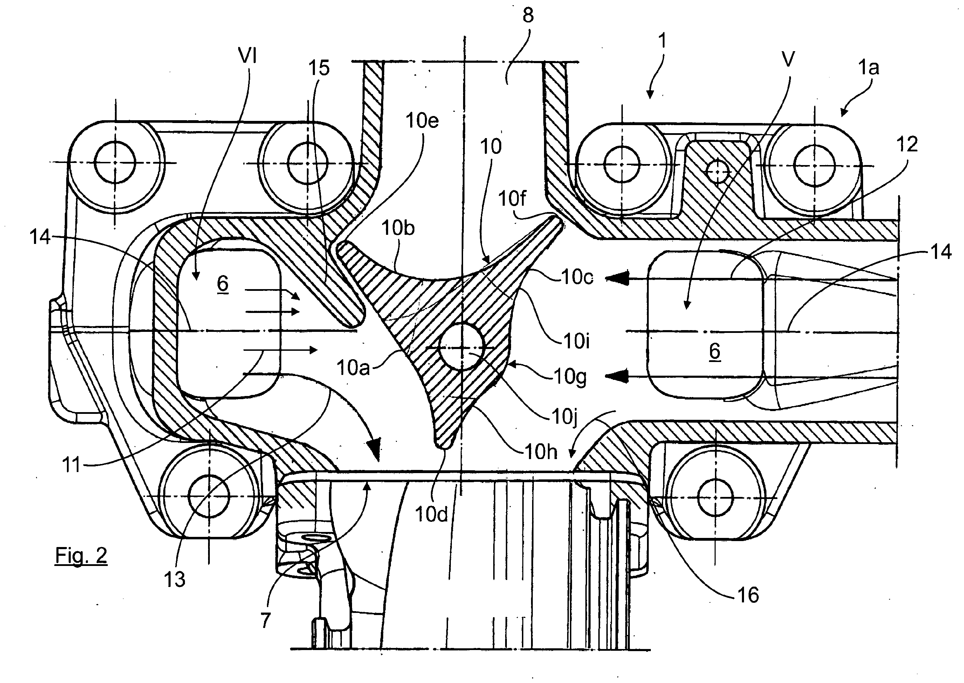

Der Abgaskrümmer 1 ist hier beispielhaft für eine Sechszylinder-Reihen-Brennkraftmaschine ausgelegt mit demzufolge sechs Anschlussstutzen 5 bzw. sechs Einströmöffnungen 6. Die im Wesentlichen quer dazu abgehenden Auslassöffnungen 7, 8 sind, wie dies insbesondere aus der Fig. 2 ersichtlich ist, beispielsweise zwischen den beiden Einströmöffnungen 6 der beiden letzten Zylinder 5 und 6 positioniert.

In diesem Bereich ist im Sammelrohr 4 eine, ein Strömungsleitelement ausbildende Abgasklappe 10 schwenkbar gelagert, und zwar bevorzugt dergestalt, wie in der Fig. 5 dargestellt, dass die Abgasklappe an diametral gegenüberliegenden Wandabschnitten des Sammelrohrs im Bereich zwischen zwei benachbarten Einströmöffnungen 6 gelagert ist. Die Schwenklagerung ist hier lediglich äußerst schematisch dargestellt und kann grundsätzlich auf jede geeignete Weise erfolgen. Die Ansteuerung der Abgasklappe 10 erfolgt bevorzugt über eine Aktuatoreinheit, die wiederum von einer Steuereinrichtung in Abhängigkeit von vorgegebenen Betriebsparametern angesteuert wird. Dies ist hier jedoch nicht dargestellt.

Wie dies nunmehr insbesondere im Detail aus der Fig. 2 ersichtlich ist, weist die Abgasklappe 10 einen dreieckförmigen bzw. Y-förmigen Walzen- und/oder Kugelquerschnitt mit drei Leitwänden 10a, 10b und 10c auf, wobei eine erste Leitwand 10a und eine zweite Leitwand 10b von den jeweiligen, hier vorteilhaft verrundeten Eckbereichen 10d, 10e und 10f ausgehend konkav nach innen gekrümmt sind, während die dritte Leitwand 10c zwischen deren ebenfalls verrundeten Eckbereichen 10d und 10f zwei aneinander angrenzende konkav nach innen gekrümmte Krümmungsbereiche 10h und 10i aufweist. Wie dies weiter aus der Fig. 2 ersichtlich ist, gehen die beiden Krümmungsbereiche 10h und 10i im Angrenzungsbereich mit einer erhabenen und verrundeten Kuppe 10g ineinander über.

Die sammelrohrwandseitig gelagerte Schwenkachse 10j ist hier ebenfalls ersichtlich.

Wie dies der Fig. 2 weiter zu entnehmen ist, ist die Abgasklappe 10 hier so im Sammelrohr 4 zwischen den beiden Einströmöffnungen 6 positioniert, dass ein erster Abgasstrom aus dem Zylinder bzw. Brennraum VI über die zugeordnete Einströmöffnung 6 in das Sammelrohr 4 einströmt und dort in einer ersten Strömungsrichtung in Richtung Abgasklappe 10 strömt, während ein zweiter Abgasstrom 12 aus den Zylindern bzw. Brennräumen I bis V (gezeigt ist in der Fig. 2 nur der Zylinder bzw. Brennraum V) über die jeweils zugeordneten Einströmöffnungen 6 in das Sammelrohr 4 einströmt und dort in einer der ersten Strömungsrichtung entgegengesetzten zweiten Strömungsrichtung in Richtung Abgasklappe 10 strömt.

In der in der Fig. 2 gezeigten AGR-Absperrstellung, insbesondere Motorstartstellung ist die Abgasklappe 2 mittels der nicht gezeigten Steuereinrichtung bzw. Aktuatorik so verschwenkt, dass diese den vom Brennraum VI kommenden Abgasstrom 11 in Richtung zur Auslassöffnung 7 zum Abgasturbolader umlenkt und eine Strömung dieses Abgasstroms 11 in Richtung zur Auslassöffnung 8 für die Abgasrückführung hin im Wesentlichen sperrt. Hierzu liegt die erste Leitwand der Abgasklappe mit einem definierten Spaltabstand bzw. unmittelbar an einem von dem Sammelrohrwandbereich weg nach innen, in das Sammelrohr 4 einragenden Wandfortsatz 15 an. Wie dies weiter sehr gut aus der Fig. 2 ersichtlich ist, bewirkt die konkave Krümmung der ersten Leitwand 10a eine Umlenkung des Abgasstroms 11 in Richtung zur Auslassöffnung 7 zum Abgasturbolader hin, wie dies mit dem Pfeil 13 symbolisch dargestellt ist. Auch der Wandfortsatz 15 ragt dergestalt winklig bzw. schräg geneigt gegen die Längsachse 14 des Sammelrohrs 4 in dieses hinein, dass die über die Einströmöffnung des Brennraums VI in das Sammelrohr eintretende erste Abgasströmung 11 von dem Wandfortsatz 15 bereits in Richtung zur Auslassöffnung 7 hin abgelenkt wird. Der Wandfortsatz 15 ist somit in Richtung zur Auslassöffnung 7 hin angewinkelt.

Wie aus der Fig. 2 ersichtlich ist, kann zwischen dem Wandfortsatz 15 und der ersten Leitwand 10a ein geringer Spaltabstand vorhanden sein, der zu vernachlässigbaren Strömungen in Richtung zur Auslassöffnung 8 für die Abgasrückführung führt. Selbstverständlich kann auch eine flächige Anlageverbindung vorgesehen sein, weswegen dann die einander zugeordneten Anlagebereiche des Wandfortsatzes 15 und der ersten Leitwand 10a entsprechend eben ausgebildet sein können.

In der in der Fig. 2 gezeigten AGR-Absperrstellung, insbesondere Motorstartstellung verschließt die Abgasklappe 10 die Auslassöffnung 8 für die Abgasrückführung im Wesentlichen vollständig bzw. mit einem definierten, vernachlässigbaren Spaltabstand. Hierzu ist dann konkret die zweite Leitwand 10b der Auslassöffnung 8 für die Abgasrückführung zugeordnet, d.h., dass diese im Zusammenwirken mit den Wandbereichen des Sammelrohrs 4 die Auslassöffnung 8 verschließt.

Der von den Zylindern bzw. Brennräumen I bis V kommende Abgasstrom 12 wird in der in der Fig. 2 gezeigten AGR-Absperrstellung, insbesondere Motorstartstellung von der Abgasklappe 10 bzw. deren dritter Leitwand 10c in Richtung zur Auslassöffnung 7 zum Abgasturbolader umgelenkt, wobei eine Strömung dieses zweiten Abgasstroms 12 in Richtung zur Auslassöffnung 8 für die Abgasrückführung im Wesentlichen gesperrt ist. Hierfür schließt die dritte Leitwand bzw. der dieser zugeordnete Eckbereich 10f an den Sammelrohrwandabschnitt im Bereich der Auslassöffnung 8 an. Dabei bewirkt insbesondere der Krümmungsbereich 10h die Ablenkung des Abgasstroms in Richtung zur Auslassöffnung 7, wie dies schematisch mit dem Pfeil 16 dargestellt ist.

In dieser AGR-Absperrstellung, insbesondere Motorstartstellung wird somit sämtliches Abgas aus den Zylindern bzw. Brennräumen I bis VI dem Abgasturbolader zugeführt, was den Startvorgang der Brennkraftmaschine begünstigt.

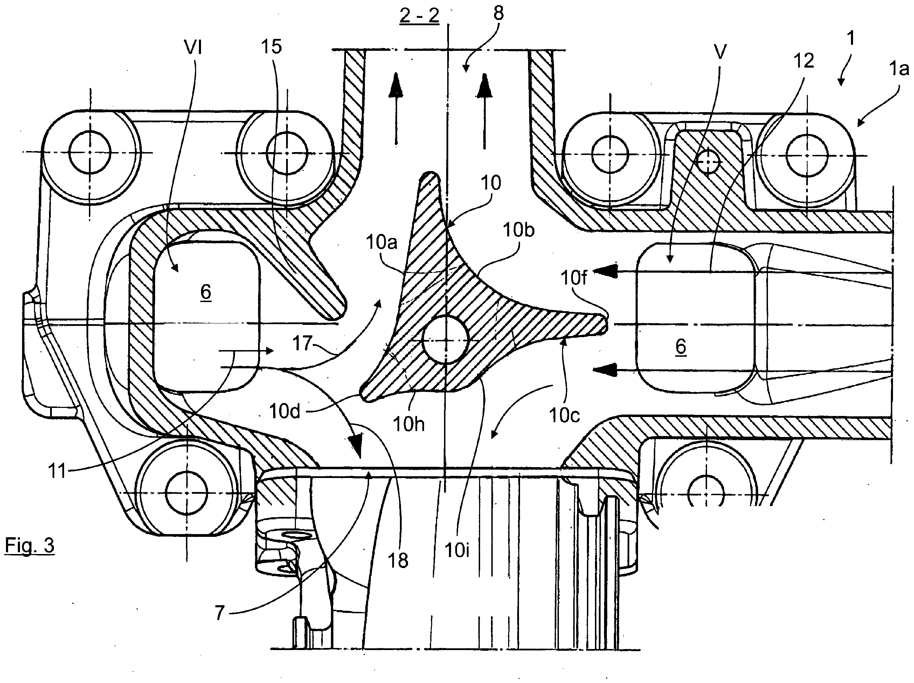

In der in der Fig. 3 dargestellten Betriebsstellung ist die Abgasklappe 10 so verschwenkt, dass der vom Brennraum VI kommende Abgasstrom 11 von der Abgasklappe 10, insbesondere vom Eckbereich 10d aufgeteilt wird und dementsprechend Abgasteilströme 17, 18 erzeugt werden. Der in der Fig. 3 in Richtung zur Auslassöffnung 8 für die Abgasrückführung abgezweigte Abgasteilstrom 17 strömt dabei entlang der ersten Leitwand 8 gerichtet bzw. gelenkt zur Auslassöffnung 8 hin. Der in Richtung zur Auslassöffnung 7 zum Abgasturbolader abgezweigte Abgasteilstrom 18 erfährt dagegen hier keine weitere Umlenkung mehr, weil die Abgasklappe 10 hier derart nah an der Auslassöffnung 7 positioniert ist, dass der Abgasteilstrom 18 unmittelbar in diese überströmt bzw. einströmt.

Der von den Brennräumen I bis V kommende Abgasstrom 12 wird ebenfalls von der Abgasklappe 10, und hier insbesondere vom Eckbereich 10f, aufgeteilt, so dass jeweils ein Teilstrom entlang der zweiten Leitwand 10b zur Auslassöffnung 8 und ein weiterer Teilstrom entlang des Krümmungsbereichs 10i der dritten Leitwand 10c zur Auslassöffnung 7 umgelenkt wird.

In dieser Betriebsstellung kann somit durch entsprechendes gezieltes Verschwenken der Abgasklappe 10 in die in der Fig. 3 gezeigte (oder jede hierzu analoge bzw. vergleichbare Position) eine vorteilhafte Steuerung der Abgasrückführungsrate und des Abgasmassenstroms zum Abgasturbolader erzielt werden. Damit lässt sich eine entsprechend dem jeweils gewünschten Betriebszustand eine auf einfache Weise zu bewerkstellende temporäre Abgasverteilung auf die Abgasrückführung und zum Abgasturbolader erzielen.

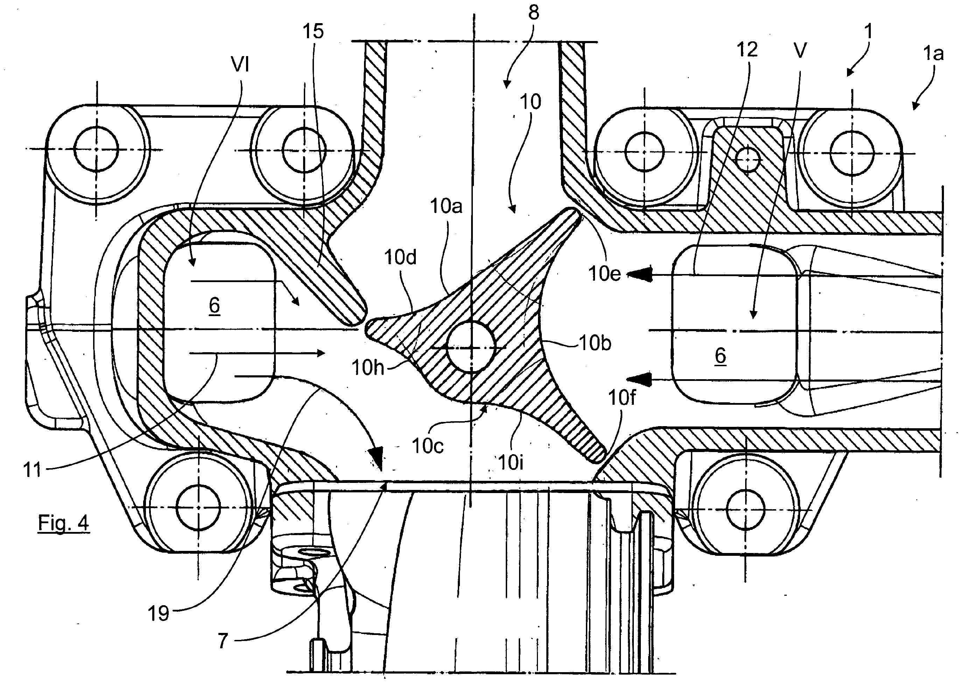

In der Fig. 4 ist schließlich eine Stellung der Abgasklappe 10 gezeigt, bei der die Motorbremse bzw. EVB (Exhaust Valve Brake) aktiviert werden soll. Wie dies aus der Fig. 4 ersichtlich ist, verschließt die Abgasklappe 10 hier mit ihrer zweiten Leitwand 10b dem zweiten Abgasstrom 12 den Strömungsweg in Richtung zu den Auslassöffnungen 7 und 8. Hierzu schließt die zweite Leitwand 10b mittels ihrer Eckbereiche 10e und 10f im Wesentlichen unmittelbar an die Sammelrohrwand 4 an. Die dritte Leitwand 10c schließt über deren Eckbereich 10d im Wesentlichen unmittelbar an den Fortsatz 15 an, so dass in der in der Fig. 4 gezeigten Motorbremsstellung lediglich eine Strömung des ersten Abgasstroms 11 vom Brennraum VI in Richtung zur Auslassöffnung 7 erfolgen kann. Hier trägt dann insbesondere der Krümmungsbereich 10h der dritten Leitwand 10c zur Strömungsumlenkung mit bei und zwar im Zusammenspiel mit der durch den Fortsatz 15 bewirkten Strömungsumlenkung.

In dieser in der Fig. 4 gezeigten Schließstellung der Brennräume I bis V ist somit lediglich ein Abgasstrom aus dem Brennraum VI zum Abgasturbolader freigegeben. Der Rückstau des Abgasstroms aus den Brennräumen I bis V bewirkt eine Bremswirkung bzw. dient als Initiator für die Aktivierung der EVB.

Es versteht sich, dass selbstverständlich die Abgasklappe 10 auch in Zwischenstellungen zu den in den Fig. 2 bis 5 gezeigten Abgasklappenstellungen verschwenkt werden kann, je nachdem, welche Motorbremswirkung erzielt werden soll und/oder welche Abgasrückführungsrate erwünscht ist und/oder welcher Abgasmassenstrom zum Abgasturbolader erwünscht ist, jeweils bezogen auf einen aktuellen Betriebszustand der Brennkraftmaschine. Diese Betriebszustände können zum Beispiel als Parameter in einem Kennfeld einer Motorsteuereinrichtung abgelegt sein bzw. auch für den jeweiligen Betriebspunkt errechnet werden und dann der Steuereinrichtung zugeführt werden, die dann entsprechend die Abgasklappe ansteuert und in die gewünschte Position verlagert.

Für eine verbesserte Strömungsdynamik im Sammelrohr 4 können die den Einströmöffnungen 6 des Sammelrohrs 4 gegenüberliegenden Wandabschnitte wellenförmig mit Bergen 4a und Tälern 4b über einen definierten Umfangsbereich (von zum Beispiel 45°) eingeformt sein, wie dies in der Fig. 5 schematisch dargestellt ist. Die Wellenberge 4a können dabei in Strömungsrichtung des Abgases jeweils vor den Einströmöffnungen 6 und die Täler 4b etwas dahinter liegen.

Des Weiteren können, was ebenfalls aus der Fig. 5 ersichtlich ist, die die Einströmöffnungen 6 in den Anschlussstutzen 5 bildenden Kanalabschnitte in Abgasströmungsrichtung geneigt bzw. gekrümmt ausgebildet sein, um, bevorzugt in Verbindung mit den gewellten Bereichen 4a, 4b, dem einströmenden Abgas eine verbesserte Strömungsumlenkung zum geradlinig ausgebildeten Sammelrohr 4 aufzuprägen.

Wie bereits zuvor ausgeführt, ist die Erfindung nicht auf das dargestellte Ausführungsbeispiel beschränkt. Insbesondere kann der Abgaskrümmer 1 auch auf andere Zylinderzahlen der Brennkraftmaschine ausgelegt sein mit entsprechend angeordneten Einströmöffnungen 6.

### Bezugszeichenliste

- 1: Abgaskrümmer
- 1a: Krümmerabschnitt
- 1b: Krümmerabschnitt
- 2: Abgasturbolader
- 3: Rohrstutzen
- 4: Sammelrohr
- 4a: Wellenberge
- 4b: Täler
- 5: Anschlussstutzen
- 6: Einströmöffnungen
- 7: Auslassöffnung ATL
- 8: Auslassöffnung AGR
- 9: Anschlussflansch
- 10: Abgasklappe
- 10a bis 10c: Leitwände
- 10d bis 10f: Eckbereiche
- 10g: Kuppe
- 10h bis 10i: Krümmungsbereiche
- 10j: Schwenkachse
- 11: erster Abgasstrom
- 12: zweiter Abgasstrom
- 13: Pfeil
- 14: Längsachse
- 15: Wandfortsatz
- 16: Pfeil
- 17: Abgasteilstrom
- 18: Abgasteilstrom
- 19: Pfeil

## Patentansprüche

1. Abgaskrümmer (1) für eine Brennkraftmaschine, mit einer Abgasturboaufladung und einer Abgasrückführung zum Rückführen von Abgas aus dem Abgaskrümmer (1) zum Maschineneinlass, wobei der Abgaskrümmer (1) ein Sammelrohr (4) mit mehreren, mit den Brennräumen der Brennkraftmaschine verbindbare Einströmöffnungen (6) und vom Sammelrohr (4) über Anschlussverbindungen abgehende Auslassöffnungen (7, 8) für die Abgasrückführung und zum Abgasturbolader aufweist, wobei den Auslassöffnungen (7, 8) ein gesteuert verlagerbares Strömungsleitelement zugeordnet ist, das den Abgasstrom in Abhängigkeit von vorgebbaren Betriebsparametern gezielt auf die Auslassöffnungen (7, 8) aufteilt,
wobei das Strömungsleitelement durch eine im Sammelrohr (4) verschwenkbar gelagerte Abgasklappe (10) gebildet ist, mittels der der Abgasstrom sowohl zu der Auslassöffnung (8) für die Abgasrückführung als auch zu der Auslassöffnung (7) zum Abgasturbolader steuerbar ist,
und wobei die Abgasklappe (10) so im Sammelrohr (4) positioniert ist, dass ein erster Abgasstrom (11) aus einer durch wenigstens einen Brennraum gebildeten ersten Brennraumgruppe über die zugeordnete wenigstens eine Einströmöffnung (6) in das Sammelrohr (4) einströmt und dort in einer ersten Strömungsrichtung in Richtung Abgasklappe (10) strömt, während ein zweiter Abgasstrom (12) aus einer durch wenigstens einen weiteren Brennraum gebildeten zweiten Brennraumgruppe über die zugeordnete wenigstens eine Einströmöffnung (6) in das Sammelrohr (4) einströmt und dort in einer der ersten Strömungsrichtung entgegengesetzten zweiten Strömungsrichtung in Richtung Abgasklappe (10) strömt, **dadurch gekennzeichnet,**
a) **dass** die Abgasklappe (10) eine erste Leitwand (10a) aufweist, die so ausgebildet ist, dass wenigstens eine der nachfolgenden Bedingungen erfüllt ist:
- **dass** diese in einer AGR-Absperrstellung einen von einer ersten Brennraumgruppe kommenden Abgasstrom (11) in Richtung zur Auslassöffnung (7) zum Abgasturbolader umlenkt und eine Strömung dieses Abgasstroms in Richtung zur Auslassöffnung (8) für die Abgasrückführung im Wesentlichen sperrt,
- **dass** diese in einer Betriebsstellung der Abgasklappe (10) einen von der ersten Brennraumgruppe kommenden und von der Abgasklappe (10) geteilten Abgasteilstrom (11) in Richtung zur Auslassöffnung (8) für die Abgasrückführung umlenkt,
- **dass** diese in einer Motorbremsstellung der Abgasklappe (10) der Auslassöffnung (8) für die Abgasrückführung zugeordnet ist und diese von dort her im Wesentlichen verschließt;
b) **dass** die Abgasklappe (10) eine zweite Leitwand (10b) aufweist, die so ausgebildet ist, dass wenigstens eine der nachfolgenden Bedingungen erfüllt ist:
- **dass** diese in einer AGR-Absperrstellung der Auslassöffnung (8) für die Abgasrückführung zugeordnet ist und diese von dort her im Wesentlichen verschließt,
- **dass** diese in einer Betriebsstellung der Abgasklappe (10) einen von einer zweiten Brennraumgruppe kommenden und von der Abgasklappe (10) geteilten Abgasteilstrom (12) in Richtung zur Auslassöffnung (8) für die Abgasrückführung umlenkt,
- **dass** diese in einer Motorbremsstellung der Abgasklappe (10) den zugeordneten Sammelrohrquerschnitt im Wesentlichen versperrt und damit einen von der zweiten Brennraumgruppe kommenden Abgasstrom (12) in Richtung der Auslassöffnungen (7, 8) im Wesentlichen sperrt; und
c) **dass** die Abgasklappe (10) eine dritte Leitwand (10c) aufweist, die so ausgebildet ist, dass wenigstens eine der nachfolgenden Bedingungen erfüllt ist:
- **dass** diese in einer AGR-Absperrstellung einen von der zweiten Brennraumgruppe kommenden Abgasstrom (12) in Richtung zur Auslassöffnung (7) zum Abgasturbolader umlenkt und eine Strömung des von der zweiten Brennraumgruppe kommenden Abgasstroms (12) in Richtung zur Auslassöffnung (8) für die Abgasrückführung im Wesentlichen sperrt,
- **dass** diese in einer Betriebsstellung der Abgasklappe (10) einen von der zweiten Brennraumgruppe kommenden und von der Abgasklappe (10) geteilten Abgasteilstrom (12) in Richtung zur Auslassöffnung (7) zum Abgasturbolader umlenkt,
- **dass** diese in einer Motorbremsstellung der Abgasklappe (10) den Sammelrohrquerschnitt im Wesentlichen dergestalt versperrt, dass ein von der ersten Brennraumgruppe kommender Abgasstrom (11) in Richtung der Auslassöffnung (7) zum Abgasturbolader umgelenkt ist und eine Strömung dieses Abgasstroms (11) in Richtung der Auslassöffnung (8) für die Abgasrückführung im Wesentlichen gesperrt ist.

2. Abgaskrümmer nach Anspruch 1, **dadurch gekennzeichnet, dass** die Auslassöffnungen (7, 8) für die Abgasrückführung und zum Abgasturbolader benachbart zueinander am Sammelrohr (4) angeordnet sind, insbesondere dergestalt, dass die Auslassöffnungen (7, 8) für die Abgasrückführung und zum Abgasturbolader im wesentlichen diametral gegenüberliegend am Sammelrohr (4) liegen.

3. Abgaskrümmer nach Anspruch 1 oder 2, **dadurch gekennzeichnet, dass** die Auslassöffnungen (7, 8) für die Abgasrückführung und zum Abgasturbolader zwischen zwei Einströmöffnungen (6) des Sammelrohres (4) positioniert sind.

4. Abgaskrümmer nach einem der vorhergehenden Ansprüche, **dadurch gekennzeichnet, dass** die Abgasklappe (10) einen mehreckigen und/oder walzen- und/oder kugelförmigen Querschnitt, insbesondere einen Y-förmigen und/oder dreieckförmigen Walzen- und/oder Kugelquerschnitt, aufweist.

5. Abgaskrümmer nach einem der vorhergehenden Ansprüche, **dadurch gekennzeichnet, dass** die Abgasklappe (10) mehrere, insbesondere drei, abgasleitende Leitwände (10a, 10b, 10c) aufweist, wobei bevorzugt vorgesehen ist, dass die Leitwände (10a, 10b, 10c) wenigstens in Teilbereichen gekrümmt, insbesondere konkav gekrümmt und/oder mit wenigstens einem derartigen Krümmungsbereich, ausgebildet sind.

6. Abgaskrümmer nach Anspruch 4 und 5, **dadurch gekennzeichnet, dass** die Abgasklappe (10) einen dreickförmigen bzw. Y-förmigen Walzen- und/oder Kugelquerschnitt mit drei Leitwänden (10a, 10b, 10c) aufweist, wobei eine erste Leitwand (10a) und eine zweite Leitwand (10b) von den jeweiligen, vorzugsweise verrundeten, Eckbereichen (10d, 10e, 10f) ausgehend konkav nach innen gekrümmt sind, während die dritte Leitwand (10c) zwischen deren, vorzugsweise verrundeten, Eckbereichen (10d, 10f) zwei aneinander angrenzende konkav nach innen gekrümmte Krümmungsbereiche (10h, 10i) aufweist, wobei bevorzugt vorgesehen ist, dass die beiden Krümmungsbereiche (10h, 10i) im Angrenzungsbereich mit einer erhabenen und verrundeten Kuppe (10g) ineinander übergehen.

7. Abgaskrümmer nach einem der vorhergehenden Ansprüche, **dadurch gekennzeichnet, dass** die dritte Leitwand (10c) zwei Krümmungsbereiche (10h, 10i), insbesondere zwei konkav gekrümmte Krümmungsbereiche, aufweist, dergestalt,
dass in einer Betriebsstellung der Abgasklappe (10) der von der zweiten Brennraumgruppe kommende und von der Abgasklappe (10) geteilte Abgasteilstrom (12) mittels des ersten Krümmungsbereiches (10i) in Richtung zur Auslassöffnung (7) zum Abgasturbolader umlenkbar ist, und
dass in einer Motorbremsstellung der Abgasklappe (10) der von der ersten Brennraumgruppe kommenden Abgasstrom (11) mittels des sich an den ersten Krümmungsbereich (10i) anschließenden zweiten Krümmungsbereiches (10h) in Richtung der Auslassöffnung (7) zum Abgasturbolader umlenkbar ist.

8. Abgaskrümmer nach einem der vorhergehenden Ansprüche, **dadurch gekennzeichnet, dass** der Abgasklappe (10) wenigstens ein, von einem Sammelrohrwandbereich weg nach innen, in das Sammelrohr (4) einragender Wandfortsatz (15) zugeordnet ist, an dem die Abgasklappe (10), insbesondere eine erste Leitwand (10a) der Abgasklappe (10), in einer AGR-Absperrstellung, insbesondere Motorstartstellung zur Sperrung des Abgasstroms (11) von der ersten Brennraumgruppe in Richtung zur Auslassöffnung (8) für die Abgasrückführung anschließt und/oder mit einem definierten Spaltabstand oder unmittelbar anliegt und/oder an den die Abgasklappe (10) in der Motorbremsstellung zur Umlenkung des von der ersten Brennraumgruppe kommenden Abgasstroms (11) in Richtung der Auslassöffnung (7) zum Abgasturbolader zur Sperrung einer Strömung dieses Abgasstroms in Richtung der Auslassöffnung (8) für die Abgasrückführung anschließt und/oder der den von der ersten Brennraumgruppe kommenden Abgasstrom (11) in eine definierte Richtung, insbesondere in Richtung der Auslassöffnung (7) zum Abgasturbolader, umlenkt.

9. Abgaskrümmer nach einem der vorhergehenden Ansprüche, **dadurch gekennzeichnet, dass** die Abgasklappe (10) asymmetrisch bezüglich der Brennraumzahl angeordnet ist und dementsprechend der ersten Brennraumgruppe eine geringere Anzahl an Brennräumen zugeordnet ist als der zweiten Brennraumgruppe, vorzugsweise der ersten Brennraumgruppe ein Brennraum oder zwei Brennräume zugeordnet sind und der zweiten Brennraumgruppe wenigstens ein Brennraum mehr zugeordnet ist.

10. Abgaskrümmer nach einem der vorhergehenden Ansprüche, **dadurch gekennzeichnet, dass** die Abgasklappe (10) an diametral gegenüberliegenden Wandabschnitten des Sammelrohrs (4), insbesondere im Bereich zwischen zwei benachbarten Einströmöffnungen (6), gelagert ist.

11. Abgaskrümmer nach einem der vorhergehenden Ansprüche, **dadurch gekennzeichnet, dass** das Sammelrohr (4) für den Anschluss von zumindest zwei Zylindern der Brennkraftmaschine, insbesondere für drei oder mehr, höchst bevorzugt sechs, Zylinder, ausgelegt ist, wobei die Abgasklappe (10) und/oder die Auslassöffnungen (7, 8) für die Abgasrückführung und zum Abgasturbolader zwischen einem der in Längsrichtung des Abgaskrümmers letzten beiden Einströmöffnungspaare (6) angeordnet ist oder sind.

12. Abgaskrümmer nach einem der vorhergehenden Ansprüche, **dadurch gekennzeichnet, dass** den Einströmöffnungen (6) im Sammelrohr (4) gegenüberliegende Wandabschnitte wellenförmig ausgebildet sind, derart, dass die jeweiligen Wellenberge (4a) in Strömungsrichtung des Abgases betrachtet vor den jeweiligen Einströmöffnungen (6) positioniert sind, wobei bevorzugt vorgesehen ist, dass die die Einströmöffnungen (6) umschließenden, an das Sammelrohr (4) angegossenen Anschlussstutzen (5) oder Rohrführungen in Strömungsrichtung des Abgases im Sammelrohr (4) geneigt oder gekrümmt ausgebildet sind.

13. Verfahren zum Betreiben einer Brennkraftmaschine eines Kraftfahrzeugs, mit einer Abgasturboaufladung und einer Abgasrückführung zum Rückführen von Abgas aus einem Abgaskrümmer (1) zum Maschineneinlass, wobei der Abgaskrümmer (1) ein Sammelrohr (4) mit mehreren, mit den Brennräumen der Brennkraftmaschine verbundene Einströmöffnungen (6) und vom Sammelrohr (4) über Anschlussverbindungen abgehende Auslassöffnungen (7, 8) für die Abgasrückführung und zum Abgasturbolader aufweist, wobei den Auslassöffnungen (7, 8) ein gesteuert verlagerbares Strömungsleitelement zugeordnet ist, mittels dem der Abgasstrom in Abhängigkeit von vorgebbaren Betriebsparametern gezielt auf die Auslassöffnungen (7, 8) aufgeteilt wird,
wobei das Strömungsleitelement durch eine im Sammelrohr (4) verschwenkbar gelagerte Abgasklappe (10) gebildet ist, mittels der der Abgasstrom sowohl zu der Auslassöffnung (8) für die Abgasrückführung als auch zu der Auslassöffnung (7) zum Abgasturbolader gesteuert wird, und
wobei die Abgasklappe (10) so im Sammelrohr (4) positioniert ist, dass ein erster Abgasstrom (11) aus einer durch wenigstens einen Brennraum gebildeten ersten Brennraumgruppe über die zugeordnete wenigstens eine Einströmöffnung (6) in das Sammelrohr (4) einströmt und dort in einer ersten Strömungsrichtung in Richtung Abgasklappe (10) strömt, während ein zweiter Abgasstrom (12) aus einer durch wenigstens einen weiteren Brennraum gebildeten zweiten Brennraumgruppe über die zugeordnete wenigstens eine Einströmöffnung (6) in das Sammelrohr (4) einströmt und dort in einer der ersten Strömungsrichtung entgegengesetzten zweiten Strömungsrichtung in Richtung Abgasklappe (10) strömt, **dadurch gekennzeichnet, dass** die Abgasklappe (10) so ausgebildet und angesteuert wird,
a) dass die Abgasklappe (10) in einer AGR-Absperrstellung wenigstens eine der nachfolgenden Bedingungen erfüllt:
- einen von einer ersten Brennraumgruppe kommenden Abgasstrom (11) in Richtung zur Auslassöffnung (7) zum Abgasturbolader umlenkt und eine Strömung dieses Abgasstroms (11) in Richtung zur Auslassöffnung (8) für die Abgasrückführung im Wesentlichen sperrt,
- die Auslassöffnung (8) für die Abgasrückführung im Wesentlichen verschließt,
- einen von der zweiten Brennraumgruppe kommenden Abgasstrom (12) in Richtung zur Auslassöffnung (7) zum Abgasturbolader umlenkt und eine Strömung des von der zweiten Brennraumgruppe kommenden Abgasstroms (12) in Richtung zur Auslassöffnung (8) für die Abgasrückführung im Wesentlichen sperrt,
b) dass die Abgasklappe (10) in einer Betriebsstellung wenigstens eine der nachfolgenden Bedingungen erfüllt:
- einen von der ersten Brennraumgruppe kommenden und von der Abgasklappe (10) geteilten Abgasteilstrom (11) aufteilt und auf beide Auslassöffnungen (7, 8) verteilt,
- einen von der zweiten Brennraumgruppe kommenden und von der Abgasklappe (10) geteilten Abgasteilstrom (12) in Richtung zur Auslassöffnung (8) für die Abgasrückführung umlenkt,
- einen von der zweiten Brennraumgruppe kommenden und von der Abgasklappe (10) geteilten Abgasteilstrom (12) in Richtung zur Auslassöffnung (7) zum Abgasturbolader umlenkt,
c) dass die Abgasklappe (10) in einer Motorbremsstellung wenigstens eine der nachfolgenden Bedingungen erfüllt:
- die Auslassöffnung (8) für die Abgasrückführung im Wesentlichen verschließt,
- einen von der zweiten Brennraumgruppe kommenden Abgasstrom (12) in Richtung der Auslassöffnungen (7, 8) im Wesentlichen sperrt,
- den von der ersten Brennraumgruppe kommenden Abgasstrom (11) in Richtung der Auslassöffnung (7) zum Abgasturbolader umlenkt und eine Strömung dieses Abgasstroms in Richtung der Auslassöffnung (8) für die Abgasrückführung im Wesentlichen sperrt.

14. Fahrzeug, insbesondere Nutzfahrzeug, mit einem Abgaskrümmer nach einem der vorhergehenden Ansprüche 1 bis 12.

## Claims

1. Exhaust manifold (1) for a combustion engine, having an exhaust turbocharging system and an exhaust gas recirculation system for recirculating exhaust gas from the exhaust manifold (1) to the engine inlet, wherein the exhaust manifold (1) has a manifold tube (4) having a plurality of inflow openings (6), which can be connected to the combustion chambers of the combustion engine, and outlet openings (7, 8) for the exhaust gas recirculation system and to the exhaust turbocharger, which branch off from the manifold tube (4) via connectors, wherein the outlet openings (7, 8) are assigned a flow guiding element which can be moved in a controlled manner and which distributes the exhaust gas stream selectively to the outlet openings (7, 8) in accordance with specifiable operating parameters, wherein the flow guiding element is formed by an exhaust gas flap (10), which is pivotably mounted in the manifold tube (4) and by means of which the exhaust gas stream can be directed both to the outlet opening (8) for the exhaust gas recirculation system and also to the outlet opening (7) to the exhaust turbocharger, and wherein the exhaust gas flap (10) is positioned in such a way in the manifold tube (4) that a first exhaust gas stream (11) from a first combustion chamber group formed by at least one combustion chamber flows into the manifold tube (4) via the associated at least one inflow opening (6) and there flows in the direction of the exhaust gas flap (10) in a first flow direction, while a second exhaust gas stream (12) from a second combustion chamber group formed by at least one further combustion chamber flows into the manifold tube (4) via the associated at least one inflow opening (6) and there flows in the direction of the exhaust gas flap (10) in a second flow direction opposite to the first flow direction, **characterized**
a) **in that** the exhaust gas flap (10) has a first guide wall (10a), which is designed in such a way that at least one of the following conditions is satisfied:
- that, in an EGR shut-off position, said guide wall deflects an exhaust gas stream (11) coming from a first combustion chamber group in the direction of the outlet opening (7) to the exhaust turbocharger and substantially blocks a flow of said exhaust gas stream in the direction of the outlet opening (8) for the exhaust gas recirculation system,
- that, in an operating position of the exhaust gas flap (10), said guide wall deflects a partial exhaust-gas stream (11) coming from the first combustion chamber group and divided by the exhaust gas flap (10) in the direction of the outlet opening (8) for the exhaust gas recirculation system,
- that, in an engine braking position of the exhaust gas flap (10), said guide wall is associated with the outlet opening (8) for the exhaust gas recirculation system and, from there, substantially closes said opening;
b) **in that** the exhaust gas flap (10) has a second guide wall (10b), which is designed in such a way that at least one of the following conditions is satisfied:
- that, in an EGR shut-off position, said guide wall is associated with the outlet opening (8) for the exhaust gas recirculation system and, from there, substantially closes said opening,
- that, in an operating position of the exhaust gas flap (10), said guide wall deflects a partial exhaust-gas stream (12) coming from a second combustion chamber group and divided by the exhaust gas flap (10) in the direction of the outlet opening (8) for the exhaust gas recirculation system,
- that, in an engine braking position of the exhaust gas flap (10), said guide wall substantially blocks the associated manifold tube cross section and thus substantially blocks an exhaust gas stream (12) coming from the second combustion chamber group in the direction of the outlet openings (7, 8); and
c) **in that** the exhaust gas flap (10) has a third guide wall (10c), which is designed in such a way that at least one of the following conditions is satisfied:
- that, in an EGR shut-off position, said guide wall deflects an exhaust gas stream (12) coming from a second combustion chamber group in the direction of the outlet opening (7) to the exhaust turbocharger and substantially blocks a flow of the exhaust gas stream (12) coming from the second combustion chamber group in the direction of the outlet opening (8) for the exhaust gas recirculation system,
- that, in an operating position of the exhaust gas flap (10), said guide wall deflects a partial exhaust-gas stream (12) coming from the second combustion chamber group and divided by the exhaust gas flap (10) in the direction of the outlet opening (7) to the exhaust turbocharger,
- that, in an engine braking position of the exhaust gas flap (10), said guide wall substantially blocks the manifold tube cross section in such a way that an exhaust gas stream (11) coming from the first combustion chamber group is deflected in the direction of the outlet opening (7) to the exhaust turbocharger and a flow of said exhaust gas stream (11) in the direction of the outlet opening (8) for the exhaust gas recirculation system is substantially blocked.

2. Exhaust manifold according to Claim 1, **characterized in that** the outlet openings (7, 8) for the exhaust gas recirculation system and to the exhaust turbocharger are arranged adjacent to one another on the manifold tube (4), in particular in such a way that the outlet openings (7, 8) for the exhaust gas recirculation system and to the exhaust turbocharger are situated substantially diametrically opposite on the manifold tube (4).

3. Exhaust manifold according to Claim 1 or 2, **characterized in that** the outlet openings (7, 8) for the exhaust gas recirculation system and to the exhaust turbocharger are positioned between two inflow openings (6) of the manifold tube (4).

4. Exhaust manifold according to one of the preceding claims, **characterized in that** the exhaust gas flap (10) has a polygonal and/or roller- and/or ball-shaped cross section, in particular a Y-shaped and/or triangular roller and/or ball cross section.

5. Exhaust manifold according to one of the preceding claims, **characterized in that** the exhaust gas flap (10) has a plurality of, in particular three, exhaust-guiding guide walls (10a, 10b, 10c), wherein provision is preferably made for the guide walls (10a, 10b, 10c) to be designed to be curved, in particular concavely curved and/or with at least one such region of curvature, at least in partial areas.

6. Exhaust manifold according to Claim 4 and 5, **characterized in that** the exhaust gas flap (10) has a triangular or Y-shaped roller and/or ball cross section with three guide walls (10a, 10b, 10c), wherein, starting from the respective, preferably rounded, corner regions (10d, 10e, 10f), a first guide wall (10a) and a second guide wall (10b) are curved concavely inwards, while the third guide wall (10c) has two adjoining, concavely inward-curved regions of curvature (10h, 10i) between the, preferably rounded, corner regions (10d, 10f) of said third guide wall, wherein provision is preferably made for the two regions of curvature (10h, 10i) to merge into one another with a raised and rounded dome (10g) in the region in which they adjoin.

7. Exhaust manifold according to one of the preceding claims, **characterized in that** the third guide wall (10c) has two regions of curvature (10h, 10i), in particular two concavely curved regions of curvature, such
that, in an operating position of the exhaust gas flap (10), the partial exhaust-gas stream (12) coming from the second combustion chamber group and divided by the exhaust gas flap (10) can be deflected in the direction of the outlet opening (7) for the exhaust turbocharger by means of the first region of curvature (10i), and
that, in an engine braking position of the exhaust gas flap (10), the partial exhaust-gas stream (12) coming from the first combustion chamber group can be deflected in the direction of the outlet opening (7) to the exhaust turbocharger by means of the second region of curvature (10h) adjoining the first region of curvature (10i).

8. Exhaust manifold according to one of the preceding claims, **characterized in that** the exhaust gas flap (10) is assigned at least one wall extension (15), which projects inwards away from a wall region of the manifold tube, into the manifold tube (4), and which is adjoined by the exhaust gas flap (10), in particular a first guide wall (10a) of the exhaust gas flap (10), in an EGR shut-off position, in particular engine starting position, in order to block the exhaust gas stream (11) from the first combustion chamber group in the direction of the outlet opening (8) for the exhaust gas recirculation system, and/or against which said exhaust gas flap rests with a defined clearance or directly, and/or which is adjoined by the exhaust gas flap (10) in the engine braking position in order to deflect the exhaust gas stream (11) coming from the first combustion chamber group in the direction of the outlet opening (7) to the exhaust turbocharger in order to block a flow of said exhaust gas stream in the direction of the outlet opening (8) for the exhaust gas recirculation system, and/or which deflects the exhaust gas stream (11) coming from the first combustion chamber group in a defined direction, in particular in the direction of the outlet opening (7) to the exhaust turbocharger.

9. Exhaust manifold according to one of the preceding claims, **characterized in that** the exhaust gas flap (10) is arranged asymmetrically in relation to the number of combustion chambers and, accordingly, a smaller number of combustion chambers is assigned to the first combustion chamber group than to the second combustion chamber group, one combustion chamber or two combustion chambers preferably being assigned to the first combustion chamber group and at least one combustion chamber more preferably being assigned to the second combustion chamber group.

10. Exhaust manifold according to one of the preceding claims, **characterized in that** the exhaust gas flap (10) is supported on diametrically opposite wall sections of the manifold tube (4), in particular in the region between two adjacent inflow openings (6).

11. Exhaust manifold according to one of the preceding claims, **characterized in that** the manifold tube (4) is designed for the connection of at least two cylinders of the combustion engine, in particular for three or more, at most preferably six, cylinders, wherein the exhaust gas flap (10) and/or the outlet openings (7, 8) for the exhaust gas recirculation system and to the exhaust turbocharger is or are arranged between one of the last two inflow opening pairs (6) in the longitudinal direction of the exhaust manifold.

12. Exhaust manifold according to one of the preceding claims, **characterized in that** wall sections situated opposite the inflow openings (6) in the manifold tube (4) are of corrugated design, such that the respective corrugation peaks (4a) are positioned in front of the respective inflow openings (6) when viewed in the flow direction of the exhaust gas, wherein provision is preferably made for the connection stubs (5) or tube guides surrounding the inflow openings (6) and cast onto the manifold tube (4) to be of sloping or curved design in the flow direction of the exhaust gas in the manifold tube (4).

13. Method for operating a combustion engine of a motor vehicle, having an exhaust turbocharging system and an exhaust gas recirculation system for recirculating exhaust gas from an exhaust manifold (1) to the engine inlet, wherein the exhaust manifold (1) has a manifold tube (4) having a plurality of inflow openings (6), which are connected to the combustion chambers of the combustion engine, and outlet openings (7, 8) for the exhaust gas recirculation system and to the exhaust turbocharger, which branch off from the manifold tube (4) via connectors, wherein the outlet openings (7, 8) are assigned a flow guiding element which can be moved in a controlled manner and by means of which the exhaust gas stream is distributed selectively to the outlet openings (7, 8) in accordance with specifiable operating parameters,
wherein the flow guiding element is formed by an exhaust gas flap (10), which is pivotably mounted in the manifold tube (4) and by means of which the exhaust gas stream is directed both to the outlet opening (8) for the exhaust gas recirculation system and also to the outlet opening (7) to the exhaust turbocharger, and
wherein the exhaust gas flap (10) is positioned in such a way in the manifold tube (4) that a first exhaust gas stream (11) from a first combustion chamber group formed by at least one combustion chamber flows into the manifold tube (4) via the associated at least one inflow opening (6) and there flows in the direction of the exhaust gas flap (10) in a first flow direction, while a second exhaust gas stream (12) from a second combustion chamber group formed by at least one further combustion chamber flows into the manifold tube (4) via the associated at least one inflow opening (6) and there flows in the direction of the exhaust gas flap (10) in a second flow direction opposite to the first flow direction, **characterized in that** the exhaust gas flap (10) is designed and controlled in such a way
a) that, in an EGR shut-off position, the exhaust gas flap (10) satisfies at least one of the following conditions:
- it deflects an exhaust gas stream (11) coming from a first combustion chamber group in the direction of the outlet opening (7) to the exhaust turbocharger and substantially blocks a flow of said exhaust gas stream (11) in the direction of the outlet opening (8) for the exhaust gas recirculation system,
- it substantially closes the outlet opening (8) for the exhaust gas recirculation system,
- it deflects an exhaust gas stream (12) coming from the second combustion chamber group in the direction of the outlet opening (7) to the exhaust turbocharger and substantially blocks a flow of the exhaust gas stream (12) coming from the second combustion chamber in the direction of the outlet opening (8) for the exhaust gas recirculation system,
b) that, in an operating position, the exhaust gas flap (10) satisfies at least one of the following conditions:
- it divides a partial exhaust-gas stream (11) coming from the first combustion chamber group and divided by the exhaust gas flap (10) and distributes it between both outlet openings (7, 8),
- it deflects a partial exhaust-gas stream (12) coming from the second combustion chamber group and divided by the exhaust gas flap (10) in the direction of the outlet opening (8) for the exhaust gas recirculation system,
- it deflects a partial exhaust-gas stream (12) coming from the second combustion chamber group and divided by the exhaust gas flap (10) in the direction of the outlet opening (7) to the exhaust turbocharger,
c) that, in an engine braking position, the exhaust gas flap (10) satisfies at least one of the following conditions:
- it substantially closes the outlet opening (8) for the exhaust gas recirculation system,
- it substantially blocks an exhaust gas stream (12) coming from the second combustion chamber group in the direction of the outlet openings (7, 8),
- it deflects the exhaust gas stream (11) coming from the first combustion chamber group in the direction of the outlet opening (7) to the exhaust turbocharger and substantially blocks a flow of said exhaust gas stream in the direction of the outlet opening (8) for the exhaust gas recirculation system.

14. Vehicle, in particular a commercial vehicle, having an exhaust manifold according to one of preceding Claims 1 to 12.

## Revendications

1. Collecteur d'échappement (1) pour un moteur à combustion interne, avec une suralimentation par turbocompresseur et un recyclage des gaz d'échappement pour recycler des gaz d'échappement provenant du collecteur d'échappement (1) vers l'entrée du moteur, le collecteur d'échappement (1) comportant un tube collecteur (4) avec plusieurs orifices d'admission (6) pouvant être reliés avec les chambres de combustion du moteur à combustion interne et orifices d'évacuation (7, 8) partant du tube collecteur (4) par l'intermédiaire de raccordements pour le recyclage des gaz d'échappement et vers le turbocompresseur, aux orifices d'évacuation (7, 8) étant associé un élément de guidage du flux déplaçable de manière commandée, qui distribue de manière ciblée le flux de gaz d'échappement en fonction de paramètres de service prédéfinissables vers les orifices d'évacuation (7, 8),
l'élément de guidage du flux étant formé par un clapet d'échappement (10) logé de manière pivotante dans le tube collecteur (4), au moyen duquel le flux de gaz d'échappement peut être piloté aussi bien vers l'orifice d'évacuation (8) pour le recyclage des gaz d'échappement que vers l'orifice d'évacuation (7) vers le turbocompresseur,
et le clapet d'échappement (10) étant positionné dans le tube collecteur (4) de telle sorte qu'un premier flux de gaz d'échappement (11) afflue à partir d'un premier groupe de chambres de combustion formé par au moins une chambre de combustion, par l'intermédiaire de l'au moins un orifice d'admission (6) associé dans le tube collecteur (4) et y circule dans une première direction d'écoulement, en direction du clapet d'échappement (10), alors qu'un deuxième flux de gaz d'échappement (12) afflue à partir d'un deuxième groupe de chambres de combustion formé par au moins une chambre de combustion supplémentaire, par l'intermédiaire de l'au moins un orifice d'admission (6) associé dans le tube collecteur (4) et y circule dans une deuxième direction d'écoulement opposée à la première direction d'écoulement en direction du clapet d'échappement (10), **caractérisé**
a) **en ce que** le clapet d'échappement (10) comporte une première paroi de guidage (10a) qui est conçue de telle sorte qu'au moins l'une des conditions suivantes soit satisfaite :
- que dans une position d'obturation du TGE, elle renvoie un flux de gaz d'échappement (11) provenant d'un premier groupe de chambres de combustion en direction de l'orifice d'évacuation (7) vers le turbocompresseur et bloque sensiblement un écoulement dudit flux de gaz d'échappement en direction de l'orifice d'évacuation (8) pour le recyclage des gaz d'échappement,
- que dans une position de service du clapet d'échappement (10), elle renvoie un flux partiel de gaz d'échappement (11), provenant du premier groupe de chambres de combustion et divisé par le clapet d'échappement (10) en direction de l'orifice d'évacuation (8) pour le recyclage des gaz d'échappement,
- que dans une position de freinage du moteur du clapet d'échappement (10), elle soit associée à l'orifice d'évacuation (8) pour le recyclage des gaz d'échappement et y ferme sensiblement celui-ci, à partir de là ;
b) **en ce que** le clapet d'échappement (10) comporte une deuxième paroi de guidage (10b) qui est conçue de telle sorte qu'au moins l'une des conditions suivantes soit satisfaite :
- que dans une position d'obturation du TGE, elle soit associée à l'orifice d'évacuation (8) pour le recyclage des gaz d'échappement et y ferme sensiblement celui-ci, à partir de là,
- que dans une position de service du clapet d'échappement (10), elle renvoie un flux partiel de gaz d'échappement (12), provenant d'un deuxième groupe de chambres de combustion et divisé par le clapet d'échappement (10) en direction de l'orifice d'évacuation (8) pour le recyclage des gaz d'échappement,
- que dans une position de freinage du moteur du clapet d'échappement (10), elle obture sensiblement la section transversale associée du tube collecteur et bloque sensiblement ainsi un flux de gaz d'échappement (12) provenant du deuxième groupe de chambres de combustion en direction des orifices d'évacuation (7, 8) ; et
c) **en ce que** le clapet d'échappement (10) comporte une troisième paroi de guidage (10c) qui est conçue de telle sorte qu'au moins l'une des conditions suivantes soit satisfaite :
- que dans une position d'obturation du TGE, elle renvoie un flux de gaz d'échappement (12) provenant du deuxième groupe de chambres de combustion en direction de l'orifice d'évacuation (7) vers le turbocompresseur et bloque sensiblement un écoulement du flux de gaz d'échappement (12) provenant du deuxième groupe de chambres de combustion en direction de l'orifice d'évacuation (8) pour le recyclage des gaz d'échappement,
- que dans une position de service du clapet d'échappement (10), elle renvoie un flux partiel de gaz d'échappement (12) provenant du deuxième groupe de chambres de combustion et divisé par le clapet d'échappement (10) en direction de l'orifice d'évacuation (7) vers le turbocompresseur,
- que dans une position de freinage du moteur du clapet d'échappement (10), elle obture sensiblement la section transversale du tube collecteur de telle sorte qu'un flux de gaz d'échappement (11) provenant du premier groupe de chambres de combustion soit renvoyé en direction de l'orifice d'évacuation (7) vers le turbocompresseur et un écoulement dudit flux de gaz d'échappement (11) en direction de l'orifice d'évacuation (8) pour le recyclage des gaz d'échappement soit sensiblement bloqué.

2. Collecteur d'échappement selon la revendication 1, **caractérisé en ce que** les orifices d'évacuation (7, 8) pour le recyclage des gaz d'échappement et vers le turbocompresseur sont placés en voisinage mutuel sur le tube collecteur (4), notamment de telle sorte que les orifices d'évacuation (7, 8) pour le recyclage des gaz d'échappement et vers le turbocompresseur se situent en étant sensiblement diamétralement opposés sur le tube collecteur (4).

3. Collecteur d'échappement selon la revendication 1 ou 2, **caractérisé en ce que** les orifices d'évacuation (7, 8) pour le recyclage des gaz d'échappement et vers le turbocompresseur sont positionnés entre deux orifices d'admission (6) du tube collecteur (4).

4. Collecteur d'échappement selon l'une quelconque des revendications précédentes, **caractérisé en ce que** le clapet d'échappement (10) comporte une section transversale polygonale et/ou cylindrique et/ou sphérique, notamment une section transversale cylindrique et/ou sphérique en forme de Y et/ou triangulaire.

5. Collecteur d'échappement selon l'une quelconque des revendications précédentes, **caractérisé en ce que** le clapet d'échappement (10) comporte plusieurs, notamment trois parois de guidage (10a, 10b, 10c) guidant des gaz d'échappement, sachant qu'il est prévu de préférence que les parois de guidage (10a, 10b, 10c) soit courbées au moins dans des zones partielle, notamment courbées de manière concave et/ou soient conçues avec au moins une zone de courbure de ce type.

6. Collecteur d'échappement selon la revendication 4 et 5, **caractérisé en ce que** le clapet d'échappement (10) comporte une section transversale triangulaire ou en forme de Y, cylindrique et/ou sphérique avec trois parois de guidage (10a, 10b, 10c), une première paroi de guidage (10a) et une deuxième paroi de guidage (10b) étant courbées de manière concave vers l'intérieur, à partir des zones angulaires (10d, 10e, 10f), de préférence arrondies respectives, alors que la troisième paroi de guidage (10c) comporte entre leurs zones angulaires (10d, 10f) de préférence arrondies deux zones de courbure (10h, 10i) adjacentes, courbées de manière concave vers l'intérieur, sachant qu'il est prévu de préférence que les deux zones de courbure (10h, 10i) passent l'une dans l'autre dans la zone adjacente avec un dôme (10g) en relief et arrondi.

7. Collecteur d'échappement selon l'une quelconque des revendications précédentes, **caractérisé en ce que** la troisième paroi de guidage (10c) comporte deux zones de courbure (10h, 10i), notamment deux zones de courbure courbées de manière concave, de telle sorte
que dans une position de service du clapet d'échappement (10), le flux partiel de gaz d'échappement (12) provenant du deuxième groupe de chambres de combustion et divisé par le clapet d'échappement (10) puisse être renvoyé au moyen de la première zone de courbure (10i) en direction de l'orifice d'évacuation (7) vers le turbocompresseur, et
que dans une position de freinage du moteur du clapet d'échappement (10), le flux de gaz d'échappement (11) provenant du premier groupe de chambres de combustion puisse être renvoyé au moyen de la deuxième zone de courbure (10h) se raccordant sur la première zone de courbure (10i) en direction de l'orifice d'évacuation (7) vers le turbocompresseur.

8. Collecteur d'échappement selon l'une quelconque des revendications précédentes, **caractérisé en ce qu'**au clapet d'échappement (10) est associé au moins un prolongement de paroi (15) saillant à partir d'une zone de paroi du tube collecteur vers l'intérieur dans le tube collecteur (4), sur lequel se raccorde le clapet d'échappement (10), notamment une première paroi de guidage (10a) du clapet d'échappement (10), dans une position d'obturation du TGE, notamment une position de démarrage du moteur, pour bloquer le flux de gaz d'échappements (11) du premier groupe de chambres de combustion en direction de l'orifice d'évacuation (8) pour le recyclage des gaz d'échappement et/ou contre lequel est disposé le clapet d'échappement avec un interstice d'écart défini ou directement et/ou auquel, pour renvoyer le flux de gaz d'échappement (11) provenant du premier groupe de chambres de combustion en direction de l'orifice d'évacuation (7) vers le turbocompresseur, pour bloquer un écoulement dudit flux de gaz d'échappement en direction de l'orifice d'évacuation (8) pour le recyclage des gaz d'échappement, dans la position de freinage du moteur, le clapet d'échappement (10) se raccorde et/ou qui dévie le flux de gaz d'échappement (11) provenant du premier groupe de chambres de combustion dans une direction définie, notamment en direction de l'orifice d'évacuation (7) vers le turbocompresseur.

9. Collecteur d'échappement selon l'une quelconque des revendications précédentes, **caractérisé en ce que** le clapet d'échappement (10) est placé de manière asymétrique par rapport au nombre de chambres de combustion et par conséquent, il est associé au premier groupe de chambres de combustion un nombre plus faible de chambres de combustion qu'au deuxième groupe de chambres de combustion, de préférence au premier groupe de chambres de combustion est/sont associée(s) une chambre de combustion ou deux chambres de combustion et au deuxième groupe de chambres de combustion est associée au moins une chambre de combustion plus.

10. Collecteur d'échappement selon l'une quelconque des revendications précédentes, **caractérisé en ce que** le clapet d'échappement (10) est logé sur des parties de paroi diamétralement opposées du tube collecteur (4), notamment dans la zone entre deux orifices d'admission (6) voisins.

11. Collecteur d'échappement selon l'une quelconque des revendications précédentes, **caractérisé en ce que** le tube collecteur (4) est conçu pour le raccordement d'au moins deux cylindres du moteur à combustion interne, notamment pour trois cylindres ou plus, de manière hautement préférentielle pour six cylindres, le clapet d'échappement (10) et/ou les orifices d'évacuation (7, 8) pour le recyclage des gaz d'échappement et vers le turbocompresseur étant placés entre une des deux dernières paires d'orifices d'admission (6) dans la direction longitudinale du collecteur d'échappement.

12. Collecteur d'échappement selon l'une quelconque des revendications précédentes, **caractérisé en ce que** des parties de paroi opposées aux orifices d'admission (6) dans le tube collecteur (4) sont conçues sous forme ondulée, de telle sorte que les crêtes des ondes (4a) respectives, considérées dans la direction d'écoulement des gaz d'échappement soient positionnées à l'avant des orifices d'admission (6), sachant qu'il est prévu de préférence que les tubulures de raccordement (5) ou guide-tubes entourant les orifices d'admission (6), coulé(e)s sur le tube collecteur (4) soit conçu(e)s en étant incliné(e)s ou recourbé(e)s en direction d'écoulement des gaz d'échappement dans le tube collecteur (4).

13. Procédé destiné à faire fonctionner un moteur à combustion interne d'un véhicule automobile, avec une suralimentation par turbocompresseur et un recyclage des gaz d'échappement pour recycler les gaz d'échappement à partir d'un collecteur d'échappement (1) vers l'entrée du moteur, le collecteur d'échappement (1) comportant un tube collecteur (4) avec plusieurs orifices d'admission (6) reliés avec les chambres de combustion du moteur à combustion interne et des orifices d'évacuation (7, 8) partant du tube collecteur (4) par l'intermédiaire de raccordements pour le recyclage des gaz d'échappement et vers le turbocompresseur, aux orifices d'évacuation (7, 8) étant associé un élément de guidage du flux déplaçable de manière commandée, au moyen duquel le flux de gaz d'échappement est distribué de manière ciblée sur les orifices d'évacuation (7, 8), en fonction de paramètres de service prédéfinissables,
l'élément de guidage du flux étant formé par un clapet d'échappement (10) logé de manière pivotante dans le tube collecteur (4), au moyen duquel le flux de gaz d'échappement peut être piloté aussi bien vers l'orifice d'évacuation (8) pour le recyclage des gaz d'échappement que vers l'orifice d'évacuation (7) vers le turbocompresseur et
le clapet d'échappement (10) étant positionné dans le tube collecteur (4) de telle sorte qu'un premier flux de gaz d'échappement (11) afflue à partir d'un premier groupe de chambres de combustion formé par au moins une chambre de combustion, par l'intermédiaire de l'au moins un orifice d'admission (6) associé dans le tube collecteur (4) et y circule dans une première direction d'écoulement, en direction du clapet d'échappement (10), alors qu'un deuxième flux de gaz d'échappement (12) afflue à partir d'un deuxième groupe de chambres de combustion formé par au moins une chambre de combustion supplémentaire, par l'intermédiaire de l'au moins un orifice d'admission (6) associé dans le tube collecteur (4) et y circule dans une deuxième direction d'écoulement opposée à la première direction d'écoulement en direction du clapet d'échappement (10), **caractérisé en ce que** le clapet d'échappement (10) est conçu et commandé de telle sorte
a) que dans une position d'obturation du TGE, le clapet d'échappement (10) satisfait au moins à l'une des conditions suivantes :
- il dévie un flux de gaz d'échappement (11) provenant d'un premier groupe de chambres de combustion en direction de l'orifice d'évacuation (7) vers le turbocompresseur et bloque sensiblement un écoulement dudit flux de gaz d'échappement (11) en direction de l'orifice d'évacuation (8) pour le recyclage des gaz d'échappement,
- il obture sensiblement l'orifice d'évacuation (8) pour le recyclage des gaz d'échappement,
- il dévie un flux de gaz d'échappement (12) provenant du deuxième groupe de chambres de combustion en direction de l'orifice d'échappement (7) vers le turbocompresseur et il bloque sensiblement un écoulement du flux de gaz d'échappement (12) provenant du deuxième groupe de chambres de combustion en direction de l'orifice d'évacuation (8) pour le recyclage des gaz d'échappement,
b) que dans une position de service, le clapet d'échappement (10) satisfait au moins à l'une des conditions suivantes :
- il sépare un flux partiel de gaz d'échappement (11) provenant du premier groupe de chambres de combustion et divisé par le clapet d'échappement (10) et le distribue sur les deux orifices d'évacuation (7, 8),
- il renvoie un flux partiel de gaz d'échappement (12) provenant du deuxième groupe de chambres de combustion et divisé par le clapet d'échappement (10) en direction de l'orifice d'évacuation (8) pour le recyclage des gaz d'échappement,
- il renvoie un flux partiel de gaz d'échappement (12) provenant du deuxième groupe de chambres de combustion et divisé par le clapet d'échappement (10) en direction de l'orifice d'évacuation (7) vers le turbocompresseur,
c) **en ce que** dans une position de freinage du moteur, le clapet d'échappement (10) satisfait au moins à l'une des conditions suivantes :
- il obture sensiblement l'orifice d'évacuation (8) pour le recyclage des gaz d'échappement,
- il bloque sensiblement un flux de gaz d'échappement (12) provenant du deuxième groupe de chambres de combustion en direction des orifices d'évacuation (7, 8),
- il renvoie le flux de gaz d'échappement (11) provenant du premier groupe de chambres de combustion en direction de l'orifice d'évacuation (7) vers le turbocompresseur et il bloque sensiblement un écoulement dudit flux de gaz d'échappement en direction de l'orifice d'évacuation (8) pour le recyclage des gaz d'échappement.

14. Véhicule, notamment véhicule utilitaire avec un collecteur d'échappement selon l'une quelconque des revendications précédentes 1 à 12.
